# EUROPEAN PATENT APPLICATION

(11) **EP 1 401 169 A1**
(43) Date of publication of application: **24.03.2004**
(21) Application number: 02360269.1
(22) Date of filing: 18.09.2002
(51) Int. Cl.: H04L 29/06

(54) **Method and system using a Meta service selector for deploying services over a plurality of networks**

(71) Applicant: ALCATEL, 75008 Paris (FR)
(72) Inventor: Defloor, Michel, 3012 Leuven (BE); Godon, Marc, 1840 Londerzeel (BE)
(74) Representative: Brose, Gerhard

(57) **Abstract**

The invention relates to distributed services, i.e. resources, deployed over a plurality of networks. More particularly, the present invention relates to a method for invoking a service (2.3) indirectly comprising the steps of creating a Meta Service Selector ('(2) Service Request Instruction', '(3) Service Request Instruction'), transmitting the Meta Service Selector ('(2) Service Request Instruction', '(3) Service Request Instruction') to said Meta Service Selector Interpreter (2.1), interpreting the Meta Service Selector ('(2) Service Request Instruction', '(3) Service Request Instruction'), establishing a service invocation context and executing the Meta Service Selector commands invoking the service (2.3), and transmitting the service result ('(4) Service Reply') to its destiny (2.1). Furthermore the invention relates to a client, a service, an application server, a network access server, a meta service selector, a meta service selector interpreter, a distributed system, and computer software products.

## Description

### BACKGROUND OF THE INVENTION

### Field of the Invention

The present invention relates to distributed services, i.e. resources, deployed over a plurality of networks to be made available. More particularly, the present invention relates to a method, a client, a service, an application server, a network access server, a meta service selector, and a meta service selector interpreter, a distributed system, and computer software products for deploying services over a plurality of networks.

### Background

The World Wide Web, or network in general, is more and more used for application to application communication. The programmatic interfaces made available are referred to as web services or simply service.

From a more user point of view a service is a process or a resource satisfying some demands, accessible via a network. To clarify the term service and the context of the problem three examples are considered.

**Example 1:** An end user wants to invoke some service located at a new second party network, while still being connected to a first party network. The user has manually to setup a connection, by identifying this new party, e.g. phone number, IP address, username, etc. for the invocation of the service.

**Example 2:** When a first user tries to reach a second user, realized by a service, and the second user does not respond, e.g. because not available or already occupied, the first user can demand a callback at the moment when the second user is available again. This callback service establishes a connection between the users automatically, when the second user is available, e.g. by the central exchange.

**Example 3:** An application server might be treated as a simple terminal, more specifically as the B-party of a communication. When a user terminal contacts an access network node, the user terminal is immediately connected to the application server. This service is typically already supported by access network nodes. No special interface between the access network node and the application server is required, and no new functionality has to be introduced in the access network node.

From an implementation point of view services are loosely coupled software pieces, usually a set of components, delivering their functionality over network technologies. As such, web services are supported by all major vendors in the software industry. Often they are defined around XML-based standards like XML Schema, SOAP, WSDL, UDDI, and others. A service infrastructure might be based on a platform for creating, using, managing, and securing web services.

Thus the definition of services comprising architecture, i.e., coupling of services, protocols, i.e., collaboration between services and interaction with clients, and the services' description, i.e., a specification of service reactivity.

Web Services Description Language (WSDL) is an Extensible Markup Language (XML)
format for describing services as a set of endpoints operating on messages containing either document-oriented or procedure-oriented information. The operations and messages are described abstractly, and then bound to a concrete network protocol and message format to define an endpoint. Related concrete endpoints are combined into abstract endpoints (services). WSDL is extensible to allow description of endpoints and their messages regardless of what message formats or network protocols are used to communicate. For instance such bindings might be SOAP 1.1, HTTP GET/POST, and MIME.

Services in this context are defined using six major elements:
□ Types, which provides data type definitions used to describe the messages exchanged.
□ Message, which represents an abstract definition of the data being transmitted. A message consists of logical parts, each of which is associated with a definition within some type system.
□ Port Type, which is a set of abstract operations. Each operation refers to an input message and output messages.
□ Binding, which specifies concrete protocol and data format specifications for the operations and messages defined by a particular Port Type.
□ Port, which specifies an address for a binding, thus defining a single communication endpoint.
□ Service, which is used to aggregate a set of related ports.

A **Protocol** intended for exchanging structured information in a decentralized, distributed environment, e.g. by using XML technologies, providing an extensible messaging framework containing a message construct that can be exchanged over a variety of underlying protocols.

A **Service architecture** is the structure or structures of the system, which comprise software components, the externally visible properties of those components, and the relationships among them.

A **Binding** is an association between an Interface, a concrete protocol and a data format. A **Binding** specifies the protocol and data format to be used in transmitting messages defined by the associated Interface.

A **Client** is a software that makes use of a Service, acting as its 'user' or 'customer'.

A **Service type** is a logical grouping of operations. An Interface represents an abstract Service type, independent of transmission protocol and data format.

A **Message** is the basic unit of communication between a service and a client: data to be communicated to or from a service as a single logical transmission.

An **Operation** (or Instruction) is a set of messages related to a single service action.

An **Interpreter** is a program that instead of producing a translation output, it performs operations implied by a source input. Interpreters are used to execute command languages.

A **Port** is an association between a Binding and a network address, specified by a URI, that may be used to communicate with an instance of a Service. A Port indicates a specific location for accessing a Service using a specific protocol and data format.

### Problem

In Example 1, the user has to interact with the system to edit the correct parameters for the new connection.
In Example 2, the connection is set up from a central point, that should be able to do this.
In Example 3, there is a central application server that processes service requests.

The problem to be solved is to provide a technology in order to bring services available indirectly, even through network boundaries.

### BRIEF DESCRIPTION OF THE INVENTION

The following method solves the stated problem. The service, requested by the user terminal goes transparently through a network access node and is processed by an application server, i.e. the network node where the service is located. When the service need further services to resolve the request, it has to determine somehow the location of these further services.

Now it derives an instruction for an interpreter to invoke these services and sends an instruction to this interpreter, located e.g. on the user terminal or on the same or other elsewhere located application server. This instruction tells the user terminal, on behalf of the user, which command it has to send to the network access node in order to invoke the requested service. These instructions should be understood by all parties, e.g. it should be conform to the basic protocol understood by the participating network nodes.

The advantage in this scenario is that via an existing connection to the user's client terminal, the interpreter at the client terminal is able automatically to perform a connection set-up mechanism, e.g., Point-to-Point Protocol (PPP), dialpad technology, etc., to set up a further connection from the client to a third party where a further service is located.

Note that the further service need not to be reachable by the first service. The instructions that will trigger the set up of this new connection come(s) directly from the provider/end point of the existing connection with no active involvement except transport at the lower layers for the access provider.

Conceptually a service is enabled to provide interpretable service request to invoke another service indirectly for providing a expected result. The service itself need not to invoke directly such other services but forwards requests or triggers a connection between the requester and a further resource location. This is a extension of the request and resource scenario by a forwarding scenario. These request is a request for a request and called meta request. The corresponding service selector is called meta service selector.

### OBJECTS AND ADVANTAGES OF THE INVENTION

A **Meta Service Selector** is object of the invention, enabling a interpreter to invoke a telecommunication or computer network service, comprising a representation of commands for a invoking a service. The representation of commands for invoking a service might optionally consisting of input parameter such as partial results, service resource locations, service requestor identifications, and result recipient identifications. The Meta Service Selector might be realized in extended Web Services Description Language.

Accordingly a **Meta Service Selector Interpreter** is an object of the invention, invoking a telecommunication or computer network service according to a Meta Service Selector, comprising interpretation means for interpreting Meta Service Selector Commands, initialization means for establishing a service invocation context, and execution means for performing said Service Selector Commands.

It is the invention to provide a **Meta Service Selector Protocol** for invoking telecommunication or computer network services according to Meta Service Selectors, specifying the exchange of Meta Service Selectors and service results. The Meta Service Selector Protocol might be realized by an extension of Extensible Mark-up Language Protocol.

A **Method** is the invention to invoke a telecommunication or computer network service indirectly comprising the following steps
- creating a Meta Service Selector for a Meta Service Interpreter
- transmitting the Meta Service Selector to said Meta Service Interpreter
- interpreting the Meta Service Selector, establishing a service invocation context, if not already established, and execution of Meta Service Selector commands by said Meta Service Interpreter for invoking said service, and
- transmitting the service result to its destiny.

Also it is the invention to provide a **Client** for invoking a telecommunication or computer network service according to a Meta Service Selector comprising a Meta Service Selector Interpreter for interpreting a Meta Service Selector, establishing a service invocation context, if not already established, and execution of Meta Service Selector commands by said Meta Service Selector Interpreter for invoking said service.

The invention is an **Application Server** for providing a first telecommunication or computer network service comprising means for generating a Meta Service Selector for a Meta Service Selector Interpreter to invoke a second telecommunication or computer network service indirectly.

The invention is also a **Telecommunication or Computer Network Service** comprising means for generating a Meta Service Selector for a Meta Service Selector Interpreter to invoke a second service indirectly.

It is the invention to provide a **Network Access Server** for invoking a telecommunication or computer network service according to a Meta Service Selector for an access client comprising a Meta Service Selector Interpreter for interpreting a Meta Service Selector, establishing a telecommunication or computer network service invocation context, if not already established, and execution of Meta Service Selector commands by said Meta Service Selector Interpreter for invoking said telecommunication or computer network service.

It is also the invention to provide a **Distributed System** comprising at least one client, at least one network, where each network comprising at least one network access server and at least one telecommunication or computer network service, where said telecommunication or computer network services comprising means for creating Meta Service Selectors, where said at least one network access server and at least one client comprising means for interpreting and executing said Meta Service Selectors and where said at least one network, at least one telecommunication or computer network service, and at least one client comprising protocol means for exchanging Meta Service Selectors and service results.

And it is the invention to provide corresponding **Computer Software Products** comprising means for creating a Meta Service Selector and comprising means for interpreting and executing a Meta Service Selector.

Accordingly, it is an object and advantage of the present invention to provide a user friendly service invocation procedure, reducing the necessary knowledge about how and where to invoke telecommunication or computer network services. Necessary service invocation knowledge at client side is reduced, e.g., by using the mechanism according to the invention making the necessary information be available in the first domain

Another advantage of the present invention is that no interaction or knowledge by user required for new connection set-up and the possibility to force new connections to third parties even over network boundaries, and that there is no need for a central application server providing services. Instead a simplified distribution of services is made possible by the invention.

Due to the conceptual character of indirect service invocation these and many other objects and advantages of the present invention will become apparent to those of ordinary skill in the art from a consideration of the drawings and ensuing description.

### BRIEF DESCRIPTION OF THE FIGURES

**Figure. 1** is a collaboration diagram illustrating prior art of the service invocation.
**Figure. 2** is collaboration diagram illustrating the indirect service invocation according to the invention.
**Figure. 3** is collaboration diagram illustrating the indirect service invocation according to the invention within an access networking scenario.
**Figure. 4** is collaboration diagram illustrating the indirect service invocation according to the invention within an access networking scenario with multiple networks and network access servers.
**Figure. 5** is a collaboration diagram illustrating the indirect service invocation according to the invention within an access networking scenario combined with a prior art service invocation.
**Figure. 6** is a collaboration diagram illustrating the indirect service invocation according to the invention within an access networking scenario where the network access service provides a service for service command interpretation.

### DETAILED DESCRIPTION OF THE INVENTION

Those of ordinary skill in the art will realize that the following description of the present invention is illustrative only and is not intended to be in any way limiting. Other embodiments of the invention will readily suggest themselves to such skilled persons from an examination of the within disclosure.

For the following figures it should be noted that service request or service invocations are sent to service instances on top of application server. Hence Service is an instance providing a result. The same applies to a client, a client is a requesting and (finally) consuming instance.

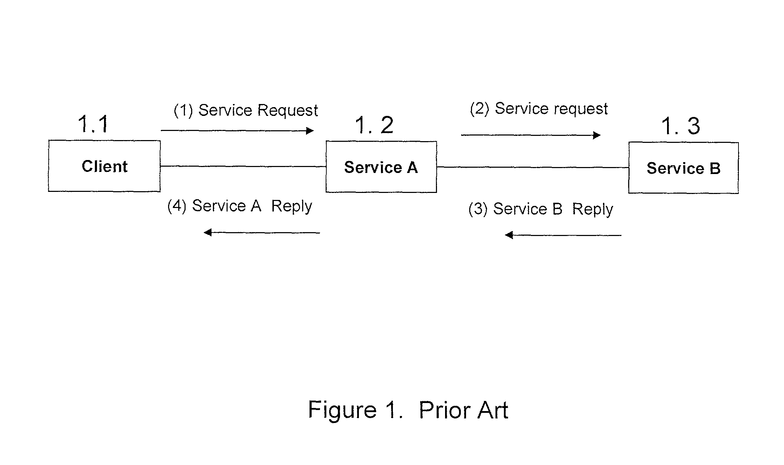

**Figure. 1** shows a collaboration diagram consisting of a client object 'Client' 1.1 and two service objects 'Service A' 1.2, and 'Service B' 1.3. There are paths between the client object 1.1 and the first service object 1.1 and between the first service object 1.1 and the second service object 1.2. The exchanged messages in sequence are two service requests '(1) Service Request', '(2) Service request', and two service replies '(3) Service B Reply', and '(4) Service A Reply'.

The diagram shows the prior art service invocation concept. The client object 1.1 invokes the first service object 1.1 by a first request '(1) Service Request'. To fulfill the request, the first service object 1.2 invokes a further service object 1.3, by messaging a second request '(2) Service request'. The further service object 1.3 fulfills this second request by messaging a first reply '(3) Service B Reply', enabling the first service object 1.2 to fulfill the first request '(1) Service Request' by messaging the corresponding second reply '(4) Service A Reply' to the client object 1.1.

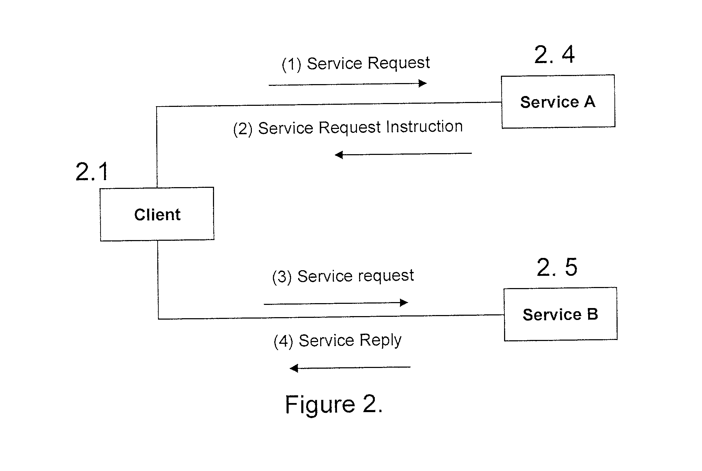

**Figure. 2** shows a collaboration diagram consisting of the client objects 'Client' 2.1, and two service objects 'Service A' 2.4, and 'Service B' 2.5. There are paths between the client object 2.1 and the first service object 2.4 and the client object 2.1 and the further service object 2.5. The exchanged messages in sequence are a request, '(1) Service Request', a request instruction '(2) Service request Instruction', another request '(3) Service request', and a final reply '(4) Service Reply'.

The diagram shows the service invocation concept according to the invention. The client object 2.1 invokes the first service object 2.4 by a first message '(1) Service Request'. To fulfill the request, the first service object 2.4 needs a further service object 2.5. The further service object 2.5 is indirectly invoked. This is done by replying to the client object 2.1 the message containing the request instruction '(2) Service Request Instruction' carrying the necessary information to invoke the further service object 2.5 for getting the requested result. The client object 2.1 now invokes based on the request instruction '(2) Service Request Instruction' the further service object 2.5 by messaging another request '(3) Service Request', and the further service object 2.5 finally answers the result within the final reply '(4) Service Reply'.

The two diagrams of Figure 1 and Figure 2, illustrate the difference between a direct service invocation (see Figure 1) and the indirect one (see Figure 2). It shows for the second case that the request instructions have to be interpreted, i.e. translated into a service invocation.

**Figure. 3** shows a collaboration diagram consisting of the client object 'Client' 3.1, a network access server object 'NAS' 3.6, and two service objects 'Service A' 3.4, and 'Service B' 3.5. There are paths between the client object 3.1 and the network access server object 3.6 as well as between the network access server object 3.6 and the service objects 3.4 and 3.5. The exchanged messages in sequence are a request '(1) Service Request', a forward '(2) Forward Service Request', a request instruction '(3) Service Request Instruction', a forwarded instruction '(4) Forward Service Request Instruction', another request '(5) Service Request', another forward '(6) Forward Service Request', a reply '(7) Service Reply', and a forward reply '(8) Forward Service Reply'.

The diagram shows the service invocation according to the invention in the context of an access network scenario. The network access server object 3.6 enables a client object 3.1 to access a network. The client object 3.1 sends the message '(1) Service Request' to the network access server object 3.6 for invoking the first service object 3.4. The network access server object 3.6 forwards the message containing the forward '(2) Forward Service Request' to service object 3.4. Service object 3.4 answers with a message containing the request instruction '(3) Service Request instructions' to the network access server object 3.6, that is forwarded by a message containing the request instruction '(4) Forward Service Request Instruction' to the client object 3.1. The client object 3.1 interprets these instructions and invokes accordingly the further service object 3.5 by sending the message containing the another service request '(5) Service Request' to the network access server object 3.6, that forwards the message containing the another forward '(6) Forward Service Request' to the further service object 3.5. Finally, the further service object 3.5 answers with the reply '(7) Service Reply' to the network access server object 3.6 acting with the forward reply '(8) Forward Service Reply' to the client object 3.1.

Here the communication is done via a network access server. It is about being connected to another service that is receding on another application server or service that might be reachable only via another connection. Note also that original service connections can remain valid; it is not only about redirecting.

**Figure. 4** shows a collaboration diagram consisting of the client object 'Client' 4.1, two network access server objects 'NAS 1' 4.6 and 'NAS 2' 4.7, and a first service object 'Service A' 4.4, a second service object 'Service B' 4.5, and a third service object 'Service C' 4.8. There are paths between the client object 4.1 and network application server objects NAS1 and NAS2, as well as between the first network access server object NAS1 and the first service object 4.4 and the second service object 4.5, and between the second network access server object NAS2 and the third service object 4.8. The exchanged messages in sequence are the same as in Figure 3.

The diagram shows the service invocation according to the invention in the context of an access network scenario with two network access servers. The first network access server object NAS1 enables a client object 4.1 to access a first network. The client object 4.1 sends the request '(1) Service Request' to the network access server object 'NAS 1' for invoking the first service object 4.4. The network access server object NAS1 sends the forward request '(2) Forward Service Request' to he first service object 4.4. The first service object 4.4 answers with the request instructions '(3) Service Request Instructions' to the network access server object NAS1, itself forwarding the forwarded instructions '(4) Forward Service Request Instruction' to the client object 4.1. The client object 4.1 interprets these instructions and invokes accordingly the third service object 4.8 by sending the another request '(5) Service Request' to the second network access server object NAS2. Possibly the client object 4.1 first have to establish a connection via the network access server object NAS2 to a second network. In the scenario, the second network access server object NAS2 acting by the another forward '(6) Forward Service Request' to the third service object 4.8. Finally, the third service object 4.8 sending a reply '(7) Service Reply' to the network access server object 'NSA 2', once more forwarding the reply by messaging forward reply '(8) Forward Service Reply' to the client object 4.1.

The new feature expressed by this scenario is that a service might be located in a different network and/or reachable via another network application service. The content of service request instruction contains all information on how to reach collaborating services and has the capability to reach these services.

**Figure. 5** shows a collaboration diagram consisting of the client object 'Client' 5.1, the network access object 'NAS' 5.6, and three service objects 'Service A' 5.9, 'Service B' 5.10, and 'Service D' 5.5. There are paths between the client object 5.1 and the network access server object 'NAS', as well as between the network access server object 'NAS' and a first service object 5.9 and a second service object 5.5, and between the first service object 5.9 and a third service object 5.10. The exchanged messages in sequence are the same as in Figure 3 beside two intermediate messages, a intermediate request '(2.1) Service Invocation' and a intermediate reply '(2.2) Service Reply'.

The diagram shows the service invocation according to the invention in the context of an access network scenario mixed with the prior art service invocation. The network access server object 'NAS' enables a client object 5.1 to access a network. The client object 5.1 sends the request '(1) Service Request' to the network access server object 'NAS' for invoking the first service object 5.9. The network access server object 'NAS' creates the forward request '(2) Forward Service Request' for the first service object 5.9. The first service object 5.9 now needs to invoke the second service object 5.10 by a intermediate message, the intermediate request '(2.1) Service Invocation' and the third service object 5.10 replies the intermediate reply '(2.2) Service Reply' to the first service object 5.9. The first service object 5.9 consumes the intermediate reply and generates the request instructions '(3) Service Request instructions' for the network access server object 'NAS', that forwards the forwarded service instructions '(4) Forward Service Request Instruction' to the client object 5.1. The client object 5.1 interprets these request instructions and invokes accordingly the second service object 5.5 by sending the another request '(5) Service Request' to the network application server object 'NAS', that forwards the another forward '(6) Forward Service Request' to the second service object 5.5. Finally, the second service object 5.5 replies with the reply '(7) Service Reply' to the network access server object 'NAS' that forwards the forward reply '(8) Forward Service Reply' to the client object 5.1.

Original the first service object 5.9 can rely on intermediate services, e.g. the third service 'Service D' 5.10 to reach the client object 5.1 or to complete the service request instruction. E.g. resolving all necessary information to reach the second service 'Service B' 5.10 might not be part of original service's 'Service A' 5.9 functionality; it might not be able to send the service request Instruction in the correct format, etc.

**Figure. 6** shows a collaboration diagram consisting of the client object 'Client' 6.1, a network application server object 'NAS / Service F' 6.11 comprising a service, and two service objects 'Service A' 6.4, and 'Service B' 6.5. There are paths between the client object 6.1 and the network application server object 'NAS / Service F' as well as between network application server object 'NAS / Service F' and both service objects 6.4 and 6.5. The exchanged messages in sequence are a request '(1) Service Request', a first forward '(2) Forward Service Request', a instruction message '(3) Service Request Instruction', a forward service command '(4) Forward Service Command', and a reply '(5) Service Reply' with a corresponding forward reply '(6) Forward Service Reply'.

The diagram shows the service invocation according to the invention in the context of an access network scenario where the network application server itself is enabled to interpret service request instructions. The enriched network access server object 'NAS / Service F' enables the client object 6.1 to access a network. The client object 6.1 sends the request '(1) Service Request' to the network application server object 'NAS / Service F' for invoking the first service object 6.4. The network application server 'NAS / Service F' forwards the first forward '(2) Forward Service Request' to the first service object 6.4. The first service object 6.4 answers with the instruction message '(3) Service Request Instructions' to the network application server object 'NAS / Service F'. Now the network application server object 'NAS / Service F' interprets these instructions and invokes accordingly the second service object 6.5 using user profile information etc. by sending the forward service command '(4) Forward Service Command' for invoking the second service object 6.5. Finally, the second service object 6.5 replies with the reply '(7) Service Reply' to the network application server object 'NAS / Service F' that forwards the corresponding forward reply '(8) Forward Service Reply' to the client object 6.1.

The scenario shows that the first service may not need to send the service request instructions back to the client; the instruction might be interpreted directly by an enriched network application server.

In the following section some illustrating applications of the invention are enumerated enlightening the functionality.

**Application 1:** While watching tele-shopping, upon customer request a voice over IP connection is set up to a call center in another virtual private network (VPN) than the video stream. The configuration for setting up this new connection are sent over the existing channel by the operator of the video stream-VPN or by the access provider to the client, enabling the connection.

**Application 2:** When an end user starts a connection to his corporate VPN for home working, the corporate forces the client to set up a simultaneous connection to a "data storage" VPN, in which the content of the end user terminal's hard disk is backed-up.

**Application 3:** While in a call to someone, one can demand a new connection from this someone's terminal to a third party, e.g. for conference call, without having to ask this someone to setup this call, e.g. because he does not have the knowledge about how to do it, as you can directly send some commands to his connection setup mechanism to startup the new connection by the interpreted command you send.

**Application 4:** An online software/data broker connects you transparently to a new VPN for data/software download after you've bought something at his internet site, without you having to do something, needing to know how to set up a new VPN, or loosing your first connection (to the internet).

Concerning the terminology of Web Services Description Language the invention is about service type and messaging. The new concept is that the primitive types are extended by higher-order types, i.e. service types that allow to express relationship between services. These relationships are commands to be send to (other) services, indirectly. The interpretation and the messaging about service meta invocation is the other aspect of the invention. A network is able to handle meta invocation, e.g. a list of commands, in the same way as a service invocation or a reply.

It is an advantageous feature that the interpretation of a service meta invocation is location dependent.

The necessary element for reducing a service meta invocation is a interpreter, translating the, e.g. commands into a real service invocation by establishing the necessary context, e.g. a connection setup.

Note that this interpreter is crucial for the invention and it might be necessary to update it accordingly, e.g. by (recursively) invoking a update service for establishing the service-meta-invocation service, also treated as a service.

### Alternative Embodiments

Although illustrative presently preferred embodiments and applications of this invention are shown and described herein, many variations and modifications are possible which remain within the concept, scope, and spirit of the invention, and these variations would become clear to those of skill in the art after perusal of this application.

For example, the invention can be used with any type of service. The description mainly uses the terminology of access network scenarios. The concept of the invention is applicable to all kind of networks, and since services is a general metaphor of serving a request of a client by a server.

The invention, therefore, is not intended to be limited except in the spirit of the appended claims.

## Claims

1. A **Meta Service Selector** ('(2) Service Request Instruction', '(3) Service Request Instruction') for enabling a interpreter to invoke a telecommunication or computer network service, comprising a representation of commands for invoking a service.

2. The **Meta Service Selector** ('(2) Service Request Instruction', '(3) Service Request Instruction') according to claim 1 where the representation of commands for invoking a service consisting of input parameter such as partial results, service resource locations, service requestor identifications, and result recipient identifications.

3. The **Meta Service Selector** ('(2) Service Request Instruction', '(3) Service Request Instruction') according to claim 1 realized in extended Web Services Description Language.

4. A **Meta Service Selector Interpreter** for invoking a telecommunication or computer network service according to a Meta Service Selector ('(2) Service Request Instruction', '(3) Service Request Instruction') according to claim 1, comprising interpretation means for interpreting Meta Service Selector Commands, initialization means for establishing a service invocation context, and execution means for performing said Service Selector Commands.

5. A **Meta Service Selector Protocol** for invoking telecommunication or computer network services according to Meta Service Selectors according to claim 1, specifying the exchange of Meta Service Selectors ('(2) Service Request Instruction', '(3) Service Request Instruction') and service results ('(4) Service Reply', '(7) Service Reply', '(5) Service Reply').

6. The **Meta Service Selector Protocol** according to claim 5 realized by an extension of Extensible Mark-up Language Protocol.

7. A **Method** for invoking a telecommunication or computer network service indirectly comprising the following steps of
- creating a Meta Service Selector ('(2) Service Request Instruction', '(3) Service Request Instruction') according to claim 1 for a Meta Service Selector Interpreter (2.1, 3.1, 4.1, 5.1, 6.11)
- transmitting the Meta Service Selector ('(2) Service Request Instruction', '(3) Service Request Instruction') to said Meta Service Selector Interpreter (2.1, 3.1, 4.1, 5.1, 6.11)
- interpreting the Meta Service Selector (Selector ('(2) Service Request Instruction', '(3) Service Request Instruction'), establishing a service invocation context, if not already established, and executing Meta Service Selector commands by said Meta Service Selector Interpreter (2.1, 3.1, 4.1, 5.1, 6.11) for invoking said service (2.5, 3.5, 4.8, 5.5, 6.5), and
- transmitting the service result ('(4) Service Reply', '(7) Service Reply', '(5) Service Reply') to its destiny.

8. A **Client** for invoking a telecommunication or computer network service according to a Meta Service Selector ('(2) Service Request Instruction', '(3) Service Request Instruction') comprising a Meta Service Selector Interpreter (2.1, 3.1, 4.1, 5.1, 6.11) for interpreting a Meta Service Selector ('(2) Service Request Instruction', '(3) Service Request Instruction') according to claim 1, establishing a service invocation context, if not already established, and execution of Meta Service Selector commands by said Meta Service Selector Interpreter (2.1, 3.1, 4.1, 5.1, 6.11) for invoking said service.

9. An **Application Server** for providing a first telecommunication or computer network service comprising means for generating a Meta Service Selector ('(2) Service Request Instruction', '(3) Service Request Instruction') according to claim 1 for a Meta Service Selector Interpreter (2.1, 3.1, 4.1, 5.1, 6.11) to invoke a second service (2.5, 3.5, 4.8, 5.5, 6.5) indirectly.

10. A **Telecommunication or Computer Network Service** comprising means for generating a Meta Service Selector ('(2) Service Request Instruction', '(3) Service Request Instruction') according to claim 1 for a Meta Service Interpreter (2.1, 3.1, 4.1, 5.1, 6.11) to invoke a second telecommunication or computer network service (2.5, 3.5, 4.8, 5.5, 6.5) indirectly.

11. A **Network Access Server** for invoking a telecommunication or computer network service for an access client according to a Meta Service Selector ('(2) Service Request Instruction', '(3) Service Request Instruction') according to claim 1 comprising a Meta Service Selector Interpreter (2.1, 3.1, 4.1, 5.1, 6.11) for interpreting a Meta Service Selector ('(2) Service Request Instruction', '(3) Service Request Instruction'), establishing a service invocation context, if not already established, and execution of Meta Service Selector commands by said Meta Service Selector Interpreter (2.1, 3.1, 4.1, 5.1, 6.11) for invoking said service (2.5, 3.5, 4.8, 5.5, 6.5).

12. A **Distributed System** comprising at least one client, at least one network, where each network comprising at least one network access server and at least one telecommunication or computer network service (2.4, 3.4, 4.45.9, 6.4), where said telecommunication or computer network services (2.4, 3.4, 4.45.9, 6.4) comprising means for creating Meta Service Selectors ('(2) Service Request Instruction', '(3) Service Request Instruction') according to claim 1, where said at least one network access server (3.6, 4.6, 4.7, 5.6, 6.11) and at least one client (2.1, 3.1, 4.1, 5.1, 6.1) comprising means for interpreting and executing said Meta Service Selectors ('(2) Service Request Instruction', '(3) Service Request Instruction') and where said at least one network, at least one telecommunication or computer network service, and at least one client comprising protocol means for exchanging Meta Service Selectors ('(2) Service Request Instruction', '(3) Service Request Instruction') and service results ('(4) Service Reply', '(7) Service Reply', '(5) Service Reply').

13. A **Computer Software Product** comprising means for creating a Meta Service Selector ('(2) Service Request Instruction', '(3) Service Request Instruction') according to claim 1.

14. A **Computer Software Product** comprising means for interpreting and executing a Meta Service Selector ('(2) Service Request Instruction', '(3) Service Request Instruction') according to claim 4.

## Amended claims

### Amended claims in accordance with Rule 86(2) EPC.

**1.** A **Meta Service Selector** ('(2) Service Request Instruction', '(3) Service Request Instruction') for enabling an interpreter to invoke a telecommunication or computer network service via an access network, comprising a representation of commands for invoking a service,
**characterized in that** the meta service selector is interpreted at an access network node of convergence within the access network for invoking said service.

**2.** The **Meta Service Selector** ('(2) Service Request Instruction', '(3) Service Request Instruction') according to claim 1, where the representation of commands for invoking a service consisting of input parameter such as partial results, service resource locations, service requestor identifications, and result recipient identifications.

**3.** The **Meta Service Selector** ('(2) Service Request Instruction', '(3) Service Request Instruction') according to claim 1, realized in extended Web Services Description Language.

**4.** A **Meta Service Selector Protocol** for invoking telecommunication or computer network services via an access network using Meta Service Selectors according to claim 1, **characterized in that** siad protocol specifying the exchange of Meta Service Selectors ('(2) Service Request Instruction', '(3) Service Request Instruction') and service results ('(4) Service Reply', '(7) Service Reply', '(5) Service Reply') between an access network node of convergence within the access network and further client and server parties.

**5.** The **Meta Service Selector Protocol** according to claim 5 realized by an extension of Extensible Mark-up Language Protocol.

**6.** A **Method** for invoking a telecommunication or computer network service via an access network indirectly comprising the following steps of
- creating a Meta Service Selector ('(2) Service Request Instruction', '(3) Service Request Instruction') according to claim 1 for a Meta Service Selector Interpreter (2.1, 3.1, 4.1, 5.1, 6.11)
- transmitting the Meta Service Selector ('(2) Service Request Instruction, '(3) Service Request Instruction') to said Meta Service Selector Interpreter (2.1,3.1,4.1,5.1,6.11)
- interpreting the Meta Service Selector (Selector ('(2) Service Request Instruction', '(3) Service Request Instruction'), establishing a service invocation context, if not already established, and executing Meta Service Selector commands by said Meta Service Selector Interpreter (2.1, 3.1, 4.1, 5.1, 6.11) for invoking said service (2.5, 3.5, 4.8, 5.5, 6.5), and
- transmitting the service result ('(4) Service Reply', '(7) Service Reply', '(5) Service Reply') to its destiny
**characterized in that** the meta service selector is interpreted at an access network node of convergence within the access network for invoking said service.

**7.** A **Client** for invoking a telecommunication or computer network service via an access network according to a Meta Service Selector ('(2) Service Request Instruction', '(3) Service Request Instruction') comprising a Meta Service Selector interpreter (2.1, 3.1, 4.1, 5.1, 6.11) for interpreting a Meta Service Selector ('(2) Service Request Instruction', '(3) Service Request Instruction') according to claim 1, establishing a service invocation context, if not already established, and execution of Meta Service Selector commands by said Meta Service Selector Interpreter (2.1, 3.1, 4.1, 5.1, 6.11) for invoking said service, **characterized in that** the meta service selector is interpreted at an access network node of convergence within the access network for invoking said service.

**8.** A **Telecommunication or Computer Network Service** at an access network comprising means for generating a Meta Service Selector ('(2) Service Request Instruction', '(3) Service Request Instruction') according to claim 1 for a Meta Service Interpreter (2.1, 3.1, 4.1, 5.1, 6.11) to invoke a second telecommunication or computer network service (2.5, 3.5, 4.8, 5.5, 6.5) indirectly, **characterized in that** the meta service selector is interpreted at an access network node of convergence within the access network for invoking said service.

**9.** A **Network Access Server** for invoking a telecommunication or computer network service for an access client according to a Meta Service Selector ('(2) Service Request Instruction', '(3) Service Request Instruction') according to claim 1 comprising a Meta Service Selector Interpreter (2.1, 3.1, 4.1, 5.1, 6.11) for interpreting a Meta Service Selector ('(2) Service Request Instruction', '(3) Service Request Instruction'), establishing a service invocation context, if not already established, and execution of Meta Service Selector commands by said Meta Service Selector Interpreter (2.1, 3.1, 4.1, 5.1, 6.11) for invoking said service (2.5, 3.5, 4.8, 5.5, 6.5).

**10.** A **Distributed System** comprising at least one client, at least one network, where each network comprising at least one network access server and at least one telecommunication or computer network service (2.4, 3.4, 4.45.9, 6.4), where said telecommunication or computer network services (2.4, 3.4, 4.45.9, 6.4) comprising means for creating Meta Service Selectors ('(2) Service Request Instruction', '(3) Service Request Instrudion') according to claim 1, where said at least one network access server (3.6, 4.6, 4.7, 5.6, 6.11) and at least one client (2.1, 3.1, 4.1, 5.1, 6.1) comprising means for interpreting and executing said Meta Service Selectors ('(2) Service Request Instruction', '(3) Service Request Instruction') and where said at least one network, at least one telecommunication or computer network service, and at least one client comprising protocol means for exchanging Meta Service Selectors ('(2) Service Request Instruction', '(3) Service Request Instruction') and service results ('(4) Service Reply', '(7) Service Reply', '(5) Service Reply'), **characterized in that** the meta service selector is interpreted at an access network node of convergence within the access network for invoking said service.

**11.** A **Computer Software Product, characterized by** comprising programming means for performing the method according to claim 6.
